# EUROPEAN PATENT APPLICATION

(11) **EP 1 737 219 A2**
(43) Date of publication of application: **27.12.2006**
(21) Application number: 06012250.4
(22) Date of filing: 14.06.2006
(51) Int. Cl.: H04N 5/44

(54) **Broadcast channel detection apparatus and method**

(30) Priority: 24.06.2005 JP 2005185244
(71) Applicant: KABUSHIKI KAISHA TOSHIBA, Tokyo 105-8001 (JP)
(72) Inventor: Wada, Naoyuki Intellectual Property Division, Tokyo 105-8001 (JP)
(74) Representative: HOFFMANN EITLE

(57) **Abstract**

An electronic apparatus includes a receiving unit (123) which receives an analog broadcast signal and a digital broadcast signal. The apparatus performs a first scanning process to detect available channels of one of analog and digital broadcast signals. The first scanning process including a process of analyzing an output of a band-pass filter (303) while varying a filter bandwidth of the band-pass filter (303) and a process of detecting presence or absence of a received signal, presence or absence of one of the analog and digital broadcast signals, and a bandwidth of the one of the analog and digital broadcast signals when the one is present. The apparatus narrows broadcast signal frequency band to be scan based on a result of the first scanning process. The apparatus performs a second scanning process to detect available channels of the other of the analog and digital broadcast signals within the narrowed frequency bands.

## Description

The present invention relates to an electronic apparatus having a receiving unit capable of receiving an analog broadcast signal and a digital broadcast signal, and a method of detecting channels used in the electronic apparatus.

In recent years, various portable personal computers such as a notebook personal computer and a laptop personal computer have been developed. The personal computers have recently been configured to incorporate a tuner unit for receiving TV broadcast signals in order to improve an audio/video (AV) function.

Different broadcast standards (or TV broadcast standards) are adopted in a large number of countries and regions in the world. For example, the broadcast standard used in Japan, North America and so on is NTSC-M, and that used in Germany and so on is PAL-B/G. There are some regions that employ a plurality of broadcast signals corresponding to different types of broadcast standards.

Personal computers equipped with a so-called worldwide tuner capable of receiving different TV broadcast signals corresponding to different broadcast standards have recently been developed. These personal computers require a function of correctly searching for all available TV broadcast channels wherever they are used. The search for available TV broadcast channels is usually performed by a method called a scan.

Jpn. Pat. Appln. KOKAI Publication No. 2005-64585 discloses a TV set having a scanning function. In the TV set, a scanning operation for digital TV broadcasting is performed on the basis of the results of a scanning operation for analog TV broadcasting. The scanning operation for digital TV broadcasting is done for channels not used in the analog TV broadcasting.

However, the scanning function of the above Publication is based on the precondition that it is used in a region employing only a specific one of the broadcast standards. Available TV broadcast channels are therefore difficult to detect correctly when it is unknown what broadcast standard is adopted in a region where a TV set is currently used.

There is possibility that portable electronic apparatuses incorporating a worldwide tuner, such as a personal computer, will be used in various regions of different broadcast standards. Even though it is unknown what broadcast standard is adopted in a region where a portable electronic apparatus is currently used, a new function of detecting available channels for analog broadcast signals and digital broadcast signals correctly and efficiently has to be fulfilled.

An object of the present invention is to provide an electronic apparatus capable of detecting available channels of analog and digital broadcast signals correctly and efficiently, and a method of detecting the channels.

According to an embodiment of the present invention, there is provided an electronic apparatus including a receiving unit which receives an analog broadcast signal and a digital broadcast signal, comprising: a first scanning control unit which controls the receiving unit and performs a first scanning process to detect available channels of one of the analog and digital broadcast signals, the analog and digital broadcast signals belonging to a given broadcast signal frequency band, the first scanning process including a process of varying a receiving frequency of the receiving unit in sequence by a first step width and a process of analyzing an output of a band-pass filter while varying a filter bandwidth of the band-pass filter among a plurality of bandwidths corresponding to different broadcast standards to detect presence or absence of a received signal, presence or absence of the one of the analog and digital broadcast signals, and a bandwidth of the one of the analog and digital broadcast signals when the one is present, for each receiving frequency, the band-pass filter being provided in the receiving unit to extract a signal component belonging to a given frequency band from a signal received by the receiving unit; a narrowing unit which narrows a broadcast signal frequency band to be scan for detect available channels of the other of the analog and digital broadcast signals to a frequency band that is likely to include other of the analog and digital broadcast signals based on a result of the first scanning process; and a second scanning control unit which controls the receiving unit and performs a second scanning process to detect available channels of the other of the analog and digital broadcast signals within the narrowed frequency band, the second scanning process including a process of varying the receiving frequency of the receiving unit in sequence by a second step width and a process of analyzing an output of the band-pass filter while varying the filter bandwidth of the band-pass filter among the bandwidths corresponding to the broadcast standards to detect presence or absence of the other of the analog and digital broadcast signals, and a bandwidth of the other of the analog and digital broadcast signals when the other is present, for each receiving frequency.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary perspective view showing an outward appearance of a computer according to an embodiment of the present invention;
FIG. 2 is an exemplary block diagram of a system configuration of the computer shown in FIG. 1;
FIG. 3 is an exemplary block diagram of a TV tuner/capture unit provided in the computer shown in FIG. 1;
FIG. 4 is an exemplary block diagram illustrating a functional structure of a TV tuner control program used in the computer shown in FIG. 1;
FIG. 5 is an exemplary diagram showing an analog TV scanning search table and a digital TV scanning search table both used in the computer shown in FIG. 1;
FIG. 6 is an exemplary diagram showing a first example of the updated contents of the search tables shown in FIG. 5;
FIG. 7 is an exemplary diagram showing a second example of the updated contents of the search tables shown in FIG. 5;
FIG. 8 is an exemplary diagram showing a third example of the updated contents of the search tables shown in FIG. 5;
FIG. 9 is an exemplary diagram showing a fourth example of the updated contents of the search tables shown in FIG. 5;
FIG. 10 is an exemplary diagram showing a fifth example of the updated contents of the search tables shown in FIG. 5;
FIG. 11 is an exemplary flowchart of a procedure for detecting a TV signal by the computer shown in FIG. 1; and
FIG. 12 is an exemplary block diagram of a receiving unit that is connected to the computer shown in FIG. 1 via a cable.

An embodiment of the present invention will be described with reference to the accompanying drawings.

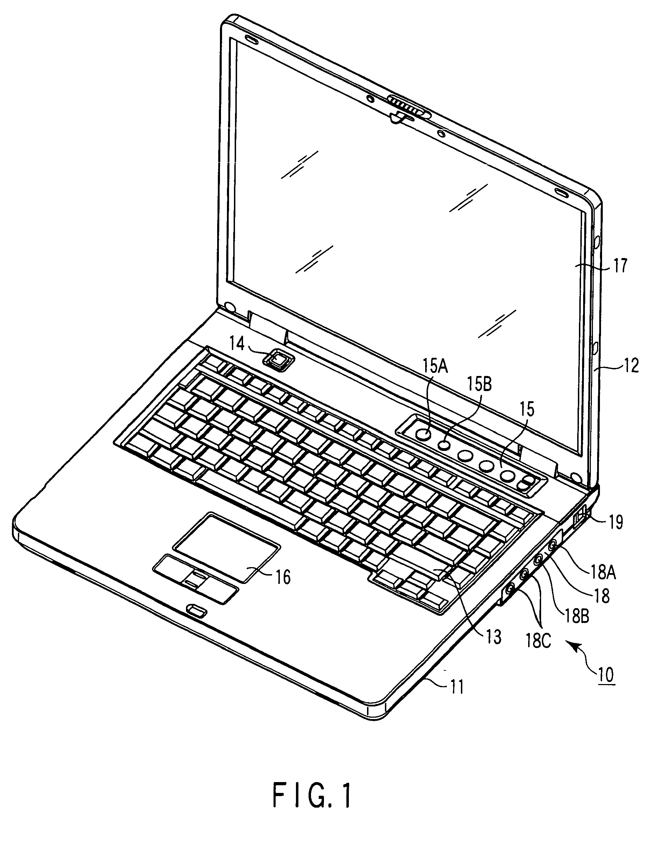

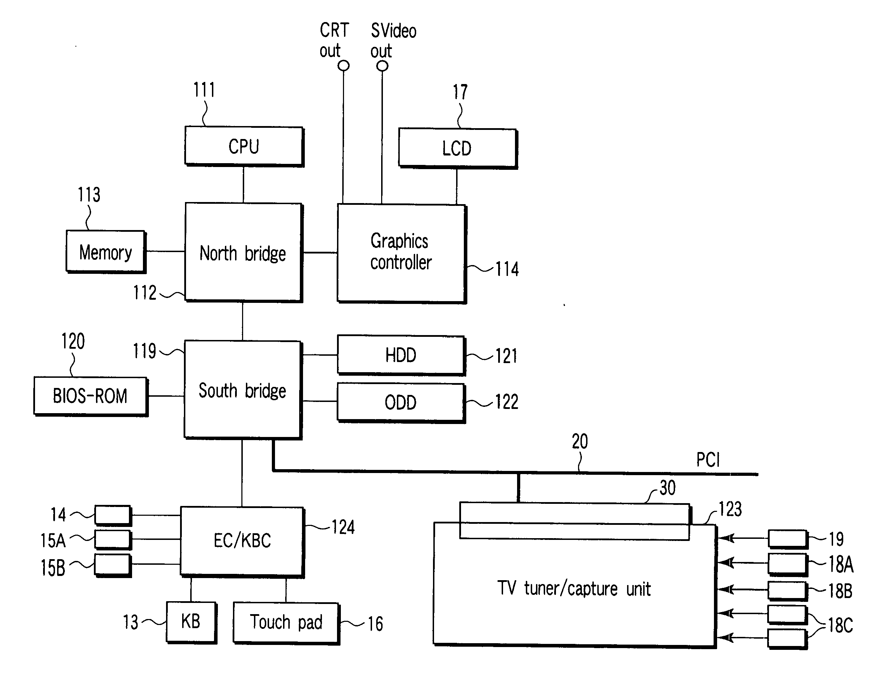

Referring first to FIGS. 1 and 2, a configuration of an electronic apparatus according to the embodiment of the present invention will be described. The electronic apparatus is a portable one capable of receiving a broadcast signal and implemented as, for example, a portable notebook personal computer 10.

FIG. 1 is a perspective view of the notebook personal computer 10 whose display unit is open. The computer 10 includes a main body 11 and a display unit 12. The display unit 12 incorporates a display device that is composed of a liquid crystal display (LCD) 17. The display screen of the LCD 17 is located in almost the central part of the display unit 12.

The display unit 12 is attached to the main body 11 such that it can turn between its open position and closed position. The main body 11 has a thin box-shaped housing. A keyboard 13, a power button 14, an input operation panel 15 and a touch pad 16 are arranged on the top surface of the main body 11. The power button 14 is used to power on/power off the computer 10.

The input operation panel 15 is an input device for inputting an event corresponding to a depressed button. The panel 15 includes a plurality of buttons for starting their respective functions. These buttons include a TV start button 15A and a channel selection button 15B. The TV start button 15A is used to reproduce TV broadcast program data. When a user depresses the TV start button 15A, a TV application program is automatically started. The TV application program is a video reproduction program for viewing and recording TV broadcast program data. The channel selection button 15B is a button for selecting a channel of TV broadcast program data to be viewed/recorded. Each time the channel selection button 15B is depressed by the user, the channel of TV broadcast program data to be viewed/recorded is changed in succession.

An audio/video (AV) connector set 18 and a TV input terminal 19 are provided on one side of the computer main body 11. The TV input terminal 19 is connected to a TV antenna cable or a CATV network. The AV connector set 18 is composed of connectors for inputting AV data from an external device, and the connectors include a composite video input connector 18A, an S-video input connector 18B and two audio input connectors (audio-L and audio-R) 18C.

Referring then to FIG. 2, the system configuration of the computer 10 will be described.

As shown in FIG. 2, the computer 10 includes a CPU 111, a north bridge 112, a main memory 113, a graphics controller 114, a south bridge 119, a BIOS-ROM 120, a hard disk drive (HDD) 121, an optical disk drive (ODD) 122, a TV tuner/capture unit 123, and an embedded controller/keyboard controller IC (EC/KBC) 124.

The CPU 111 is a processor for controlling the operation of the computer 10. The CPU 111 executes an operating system (OS) and various application programs, which are loaded into the main memory 113 from the HDD 121. As the application programs, a tuner control program as well as the above TV application program is used. The tuner control program is a program for controlling the operation of the TV tuner/capture unit 123. The tuner control program performs a scanning operation by request of the TV application program. The scanning operation is performed to detect analog broadcast channels and digital broadcast channels, which can be received by the TV tuner/capture unit 123. With the scanning operation, all available channels of the analog broadcast signal and all available channels of the digital broadcast signal can automatically be detected.

The CPU 111 executes a Basic Input Output System (BIOS) stored in the BIOS-ROM 120. The BIOS is a program for controlling hardware.

The north bridge 112 is a bridge device that connects a local bus of the CPU 111 and the south bridge 119. The north bridge 112 incorporates a memory controller for controlling access to the main memory 113. The north bridge 112 has a function of communicating with the graphics controller 114 via an accelerated graphics port (AGP) bus or the like.

The graphics controller 114 is a display controller that controls the LCD 17, which is used as a display monitor of the computer 10. The graphics controller 114 has a video memory (VRAM) and generates a video signal from display data written to the video memory (VRAM) by an OS/application program. This video signal is generated to form a display image to be displayed on the LCD 17. The graphics controller 114 also has an interface for outputting an analog video signal to an external cathode ray tube (CRT) and an interface for outputting an analog video signal to the outside via an S-video output connector.

The south bridge 119 controls devices on a Low Pin Count (LPC) bus. The south bridge 119 incorporates an Integrated Drive Electronics (IDE) controller for controlling the HDD 121 and ODD 122. The south bridge 119 has a function of controlling access to the BIOS-ROM 120 and a function of controlling devices on a Peripheral Component Interconnect (PCI) bus 20.

The TV tuner/capture unit 123 is connected to the PCI bus 20 via a bus connector 30. The bus connector 30 is formed of, for example, a Mini PCI connector. The TV tuner/capture unit 123 is a receiving unit for receiving analog broadcast signals such as terrestrial analog TV broadcast signals and digital broadcast signals such as terrestrial digital TV broadcast signals. The analog broadcast signals are usually broadcasted in a broadcast signal frequency band including the VHF band and UHF band. The digital broadcast signals are often broadcasted in a broadcast signal frequency band including the UHF band, but they are sometimes broadcasted in the VHF band depending on the regions.

The TV tuner/capture unit 123 receives analog broadcast signals or digital broadcast signals, which are broadcasted in a broadcast signal frequency band including the VHF band and UHF band. Then, the unit 123 outputs video and audio signals contained in the received broadcast signals onto the PCI bus 20. The unit 123 compression-encodes the video and audio signals contained in the analog broadcast signals by compression coding such as Moving Picture Coding Experts Group 2 (MPEG2), and outputs the compression-encoded video and audio signals onto the PCI bus 20. The compression-encoded video and audio signals are decoded by the TV application program. On the other hand, the digital broadcast signals contain compression-encoded video and audio signals and thus these compression-encoded video and audio signals are output onto the PCI bus 20.

The EC/KBC 124 is a single-chip microcomputer on which an embedded controller for managing power and a keyboard controller for controlling the keyboard (KB) 13 and the touch pad 16 are integrated. The EC/KBC 124 has a function of powering on/powering off the computer 10 in accordance with a user's depression of the power button 14.

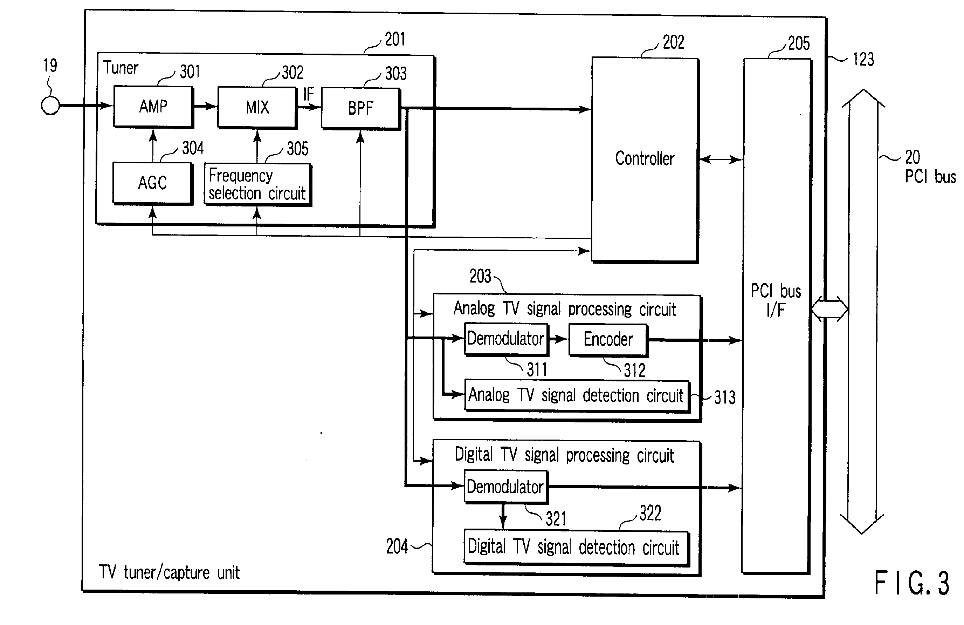

The configuration of the TV tuner/capture unit 123 will be described with reference to FIG. 3.

As described above, the TV tuner/capture unit 123 is configured to receive both analog broadcast signal and digital broadcast signal. The tuner 123 includes a tuner 201, a controller 202, an analog TV signal processing circuit 203, a digital TV signal processing circuit 204 and a PCI bus interface 205.

TV broadcast signals are supplied to the TV input terminal 19 from an antenna or a CATV network. The tuner 201 is connected to the TV input terminal 19 to receive TV broadcast signal for carrying video and audio signals. The tuner 201 can tune a receiving frequency to receive broadcast signal that falls within a desired frequency band. The broadcast signal input from the TV input terminal 19 is converted from radiofrequency (RF) signal into intermediate-frequency (IF) signal by the tuner 201 and then supplied to the analog TV signal processing circuit 203 and digital TV processing circuit 204.

The tuner 201 includes an amplifier (AMP) 301, a frequency converter (MIX) 302 called a mixer, a band-pass filter (BPF) 303, an auto gain control (AGC) circuit 304 and a frequency selection circuit 305.

The broadcast signal input to the TV input terminal 19 is amplified by the amplifier (AMP) 301 and then supplied to the frequency converter 302. Under the control of the frequency selection circuit 305, the frequency converter 302 converts a broadcast signal (RF signal), which falls within a specific frequency band whose center frequency is equal to a frequency selected by the circuit 305, into a predetermined specific intermediate frequency (IF) signal.

Under the control of the controller 202, the AGC circuit 304 controls the amplification factor of the amplifier 301 in such a manner that a broadcast signal having a fixed level is supplied to the frequency converter 302. The AGC circuit 304 increases the amplification factor of the amplifier 301 when the level of the broadcast signal supplied from the TV input terminal 19 is low and decreases it when the level is high.

The frequency selection circuit 305 is a circuit for selecting a frequency (receiving frequency) to be received by the tuner 201 under the control of the controller 202. The circuit 305 sends a local oscillation signal to the frequency converter 302. The frequency of the local oscillation signal depends upon a relationship between the receiving frequency and the frequency of the IF signal. The frequency converter 302 multiplies the RF signal supplied from the amplifier 301 by the local oscillation signal supplied from the frequency selection circuit 305 to convert the RF signal into an IF signal.

The band-pass filter (BPF) 303 is a filter through which only the signal components of the IF signal, which fall within a given frequency band, pass. The band-pass filter 303 is formed of, e.g., a surface acoustic wave (SAW) filter.

If it were not for the band-pass filter 303, a signal other than a desired signal to be received and noise would be sent to the analog and digital TV signal processing circuits 203 and 204 to degrade an S/N ratio. The bandwidth (pass-band width) of the band-pass filter 303 depends upon the broadcast standard of a broadcast signal to be received. If a signal of only the NTSC-M standard used in Japan is to be received, a fixed value of 6 MHz is adequate for the bandwidth of the band-pass filter 303. In the present embodiment, however, different broadcast signals corresponding to various broadcast standards are to be received, the bandwidth of the band-pass filter 303 has to change to 6 MHz, 7 MHz, and 8 MHz. Therefore, the band-pass filter 303 is so configured that its bandwidth can be varied. The controller 202 controls the bandwidth of the filter 303.

The analog TV signal processing circuit 203 is an analog broadcast signal processing circuit for processing analog broadcast signal received by the tuner 201 (referred to as analog TV signal hereinafter) and includes a demodulator 311, an encoder 312 and an analog TV signal detection circuit 313.

The analog TV signal detection circuit 313 analyzes an IF signal output from the band-pass filter 303 and detects an analog TV signal. Thus, the circuit 313 determines whether the analog TV signal is present in a frequency band defined by both the current receiving frequency of the tuner 201 and the current bandwidth of the band-pass filter 303.

Even though the receiving frequency selected by the frequency selection circuit 305 and the actual frequency of a channel of a broadcast signal supplied from the TV input terminal 19 do not completely correspond to each other, the analog TV signal detection circuit 313 can correctly detect whether an analog TV signal is present or not if an amount of an error between the receiving and actual frequencies falls within a given range (detectable frequency range). Further, the circuit 313 can compute the amount of above error. The controller 202 acquires the amount of the error from the circuit 313 and controls the receiving frequency on the basis of the acquired the amount of the error.

The demodulator 311 is a circuit for demodulating an analog TV signal. The demodulator 311 separates the IF signal output from the band-pass filter 303 into a video signal and an audio signal and decodes these video and audio signals. The encoder 312 compression-encodes the decoded video and speech signals to generate a digital stream containing the compression-encoded video and audio signals. The digital stream is output onto the PCI bus 20.

The digital TV signal processing circuit 204 is a digital broadcast signal processing circuit for processing digital TV broadcast signals received by the tuner 201 (referred to as digital TV signals hereinafter) and includes a demodulator 321 and a digital TV signal detection circuit 322.

The demodulator 321 is a circuit for demodulating a digital TV signal and demodulates an IF signal output from the band-pass filter 303 by a demodulating method corresponding to a modulation method such as OFDM and QAM to generate a digital stream such as a transport stream. The digital stream is output onto the PCI bus 20.

The digital TV signal detection circuit 322 analyzes an IF signal output from the band-pass filter 303 and detects a digital TV signal. Thus, the circuit 322 determines whether the digital TV signal is present in a frequency band defined by both the current receiving frequency of the tuner 201 and the current bandwidth of the band-pass filter 303. This detection can also be performed using, e.g., a result of demodulating by the demodulator 321. If the demodulator 321 cannot perform a demodulating operation correctly, the circuit 322 determines that there are no digital TV signals. Even though the receiving frequency selected by the frequency selection circuit 305 and the actual frequency of a channel of a broadcast signal supplied from the TV input terminal 19 do not completely correspond to each other, the digital TV signal detection circuit 322 can correctly detect whether a digital TV signal is present or not if an amount of an error between the receiving and actual frequencies falls within a given range (detectable frequency range of the circuit 322). Further, the circuit 322 can compute the amount of above error. The controller 202 acquires the amount of the error from the circuit 322 and adjusts the receiving frequency on the basis of the acquired amount of the error.

The controller 202 controls the tuner 201, analog TV signal processing circuit 203 and digital TV signal processing circuit 204 based on an instruction from the TV application program or tuner control program. More specifically, the controller 202 controls the AGC circuit 304, frequency selection circuit 305 and band-pass filter 303 to set the receiving frequency to an adequate value, set the IF signal to an adequate signal level and change the filter bandwidth selectively. The controller 202 acquires a detection result of an analog TV signal and that of a digital TV signal from the analog TV signal processing circuit 203 and digital TV signal processing circuit 204, respectively to determine the presence or absence of an analog TV signal and the presence or absence of a digital TV signal. Further, the controller 202 determines a signal level of a received signal (input signal) on the basis of the signal level of an IF signal output from the band-pass filter 303 and the value of a gain set in the AGC circuit 304 to detect presence or absence of the received signal (input signal) for each receiving frequency.

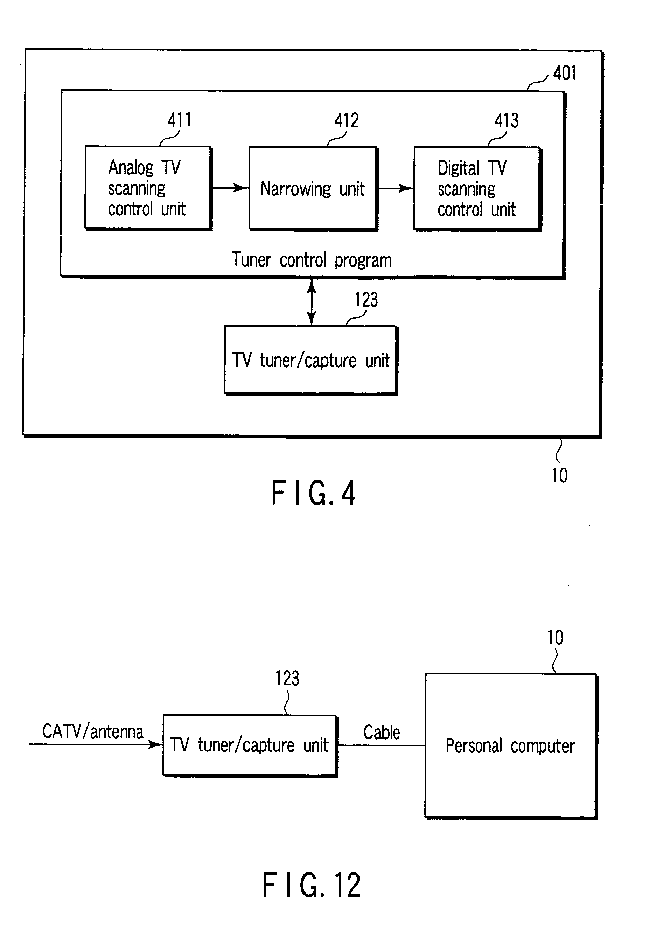

FIG. 4 illustrates a functional structure of the tuner control program.

Referring to FIG. 4, a tuner control program 401 includes an analog TV scanning control unit 411, a narrowing unit 412 and a digital TV scanning control unit 413 as functional modules for detecting a channel.

The analog TV scanning control unit 411 controls the TV tuner/capture unit 123 to perform an analog TV scanning process of detecting all available analog broadcast channels that fall within a broadcast signal frequency band including the VHF band and UHF band.

The analog TV scanning control unit 411 performs: (1) a process of controlling the frequency selection circuit 305 to vary the receiving frequency by a given step width; and (2) a process of analyzing the output signal (IF signal) of the band-pass filter 303 while varying the filter bandwidth of the band-pass filter 303 among a plurality of bandwidths (e.g., 6 MHz, 7 MHz, 8 MHz) corresponding to different broadcast standards to detect the presence or absence of a received signal (input signal), the presence or absence of an analog TV signal, and the bandwidth of an analog TV signal when it is present, for each receiving frequency. The detection of the presence or absence of an analog TV signal is carried out using the analog TV signal detection circuit 313.

When the analog TV scanning control unit 411 detects an analog TV signal at a receiving frequency, it determines a frequency band, which is to be excluded from the frequency band for the analog TV scanning process, on the basis of the bandwidth of the detected analog TV signal, and adjusts the value of a receiving frequency to be set next, on the basis of the determined frequency band.

The narrowing unit 412 narrows the broadcast signal frequency to be scan for detecting digital broadcast channels, to a frequency band that is likely to include a digital TV signal, on the basis of the analog TV signal detected by the unit 411 and the bandwidth thereof. The narrowing unit 412 determines the frequency band other than the frequency bands in which no received signal is detected by the unit 411 and the frequency bands which include the analog TV signal detected by the unit 411 in the broadcast signal frequency band as the frequency band that is likely to include a digital TV signal.

The digital TV scanning control unit 413 performs a digital TV scanning process of detecting all available digital broadcast channels for the narrowed frequency bands, or the frequency bands that are likely to include a digital TV signal.

The digital TV scanning control unit 413 performs: (1) a process of controlling the frequency selection circuit 305 to vary the receiving frequency by a given step width; and (2) a process of analyzing the output signal (IF signal) of the band-pass filter 303 while varying the filter bandwidth of the band-pass filter 303 among a plurality of bandwidths (e.g., 6 MHz, 7 MHz, 8 MHz) corresponding to different broadcast standards to detect the presence or absence of a received signal (input signal), the presence or absence of a digital TV signal, and the bandwidth of a digital TV signal when it is present, for each receiving frequency. The detection of the presence or absence of a digital TV signal is carried out using the digital TV signal detection circuit 322.

When the digital TV scanning control unit 413 detects a digital TV signal at a receiving frequency, it determines a frequency band, which is to be excluded from the frequency band for the digital TV scanning process, on the basis of the bandwidth of the detected digital TV signal, and adjusts the value of a receiving frequency to be set next, on the basis of the determined frequency band.

The digital TV scanning process can be performed prior to the analog TV scanning process. In this case, the narrowing unit 412 narrows the broadcast signal frequency bands to frequency bands that are likely to include an analog TV signal on the basis of the digital TV signal detected by the unit 413 and the bandwidth thereof. The analog TV scanning process is intended only for the frequency bands that are likely to include an analog TV signal.

Assume hereinafter that the analog TV scanning process is carried out first and then the digital TV scanning process is done using the result of the analog TV scanning process.

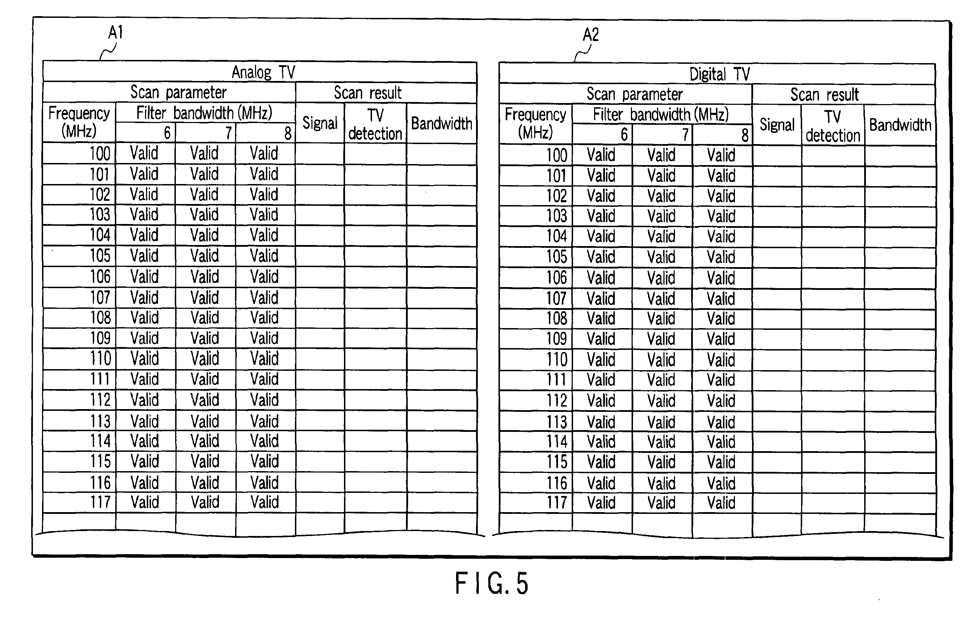

FIG. 5 shows a search table A1 used in the analog TV scanning process and a search table A2 used in the digital TV scanning process.

Each of the search tables A1 and A2 defines a field indicating scan parameters and a field indicating scan results.

The field indicating scan parameters is made up of a subfield indicating receiving frequencies and three filter bandwidth subfields each indicating whether each of the filter bandwidths (6 MHz, 7 MHz, 8 MHz) is valid or invalid. In each of the filter bandwidth subfields, a value "Valid" indicates that a scanning process should be performed using a filter bandwidth corresponding to the filter bandwidth subfield. In initial condition, the value "Valid" is set to each of the filter bandwidth subfields at whatever receiving frequency.

The field indicating scan results is made up of a "signal" subfield that stores a status indicating the presence or absence of a received signal, a "TV detection subfield" that stores a status indicating the presence or absence of a TV signal (analog TV signal in search table A1 and digital TV signal in search table A2), and a "bandwidth" subfield that indicates the bandwidth of the detected TV signal (the detected channel).

In the present embodiment, the analog TV scanning process is carried out while the receiving frequency is varying by a step width of 1 MHz from 100 MHz. The step width of 1 MHz is a parameter that depends on the detectable frequency range of the analog TV signal detection circuit 313. If the detectable frequency range of the circuit 313 is ±1 MHz, 2 MHz is adequate for the step width. If it is ±500 kMHz, 1 MHz is adequate for the step width. In order to prevent the skip of detection of a frequency range, generally, the step width is set to a value that is smaller than the detectable frequency range of the circuit 313. Assume in the present embodiment that the detectable frequency range of the circuit 313 is ±1 MHz and the step width is 1 MHz.

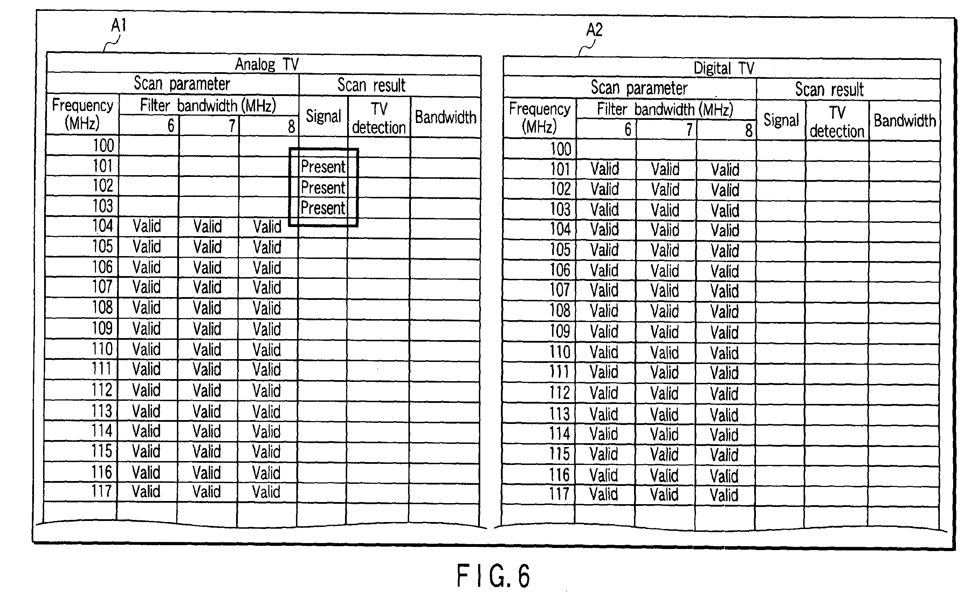

A procedure for detecting channels according to the present embodiment will be described with reference to FIGS. 6 through 9.

The analog TV scanning process includes a process of detecting the presence or absence of a received signal, the presence or absence of an analog TV signal, and the bandwidth of an analog TV signal when it is present, while varying the filter bandwidth in the order of 6 MHz, 7 MHz and 8 MHz for each receiving frequency.

Assuming that no received signal is detected at a receiving frequency in any of the cases where the filter bandwidth is 6 MHz, it is 7 MHz and it is 8 MHz, no signal is present at the receiving frequency and thus the receiving frequency is excluded from an object for the digital TV scanning process. FIG. 6 shows the contents of search tables A1 and A2 obtained when no received signal is detected at the receiving frequency of 100 MHz, in any of the cases where the filter bandwidth is 6 MHz, it is 7 MHz and it is 8 MHz. In search table A1, the values of three filter bandwidth subfields corresponding to the received frequency of 100 MHz are set to "Blank" representing "invalid." Since there is no received signal at a receiving frequency of 100 MHz, the receiving frequency is excluded from an object for the digital TV scanning process. In search table A2, too, the values of three filter bandwidth subfields corresponding to the received frequency of 100 MHz are set to "Blank" representing "invalid."

Assuming that a received signal is detected at a receiving frequency when the filter bandwidth is any one of 6 MHz, 7 MHz and 8 MHz, a value "Present" indicating the presence of the received signal is set to a "signal" subfield corresponding to the received frequency in search table A1. Further, assume that the presence of a received signal is detected and that of an analog TV signal is detected at a receiving frequency when the filter bandwidth is one of 6 MHz, 7 MHz and 8 MHz. A value "Present" is then set to a "signal" subfield and a "TV detection" subfield corresponding to the received frequency in search table A1, and the bandwidth of the detected analog TV signal is set to a "bandwidth" field corresponding to the received frequency. This bandwidth is a value of the filter bandwidth used when the analog TV signal is detected.

In the analog TV scanning process corresponding to each of the receiving frequencies of 101 MHz, 102 MHz and 103 MHz, when the presence of a received signal is detected and that of an analog TV signal is not detected, a value "Valid" indicating that a received signal is set in the "Signal" subfield corresponding to each of the receiving frequencies of 101 MHz, 102 MHz and 103 MHz, and a value of the "TV detection" subfield corresponding to each of the receiving frequencies is "Blank," as shown in FIG. 6.

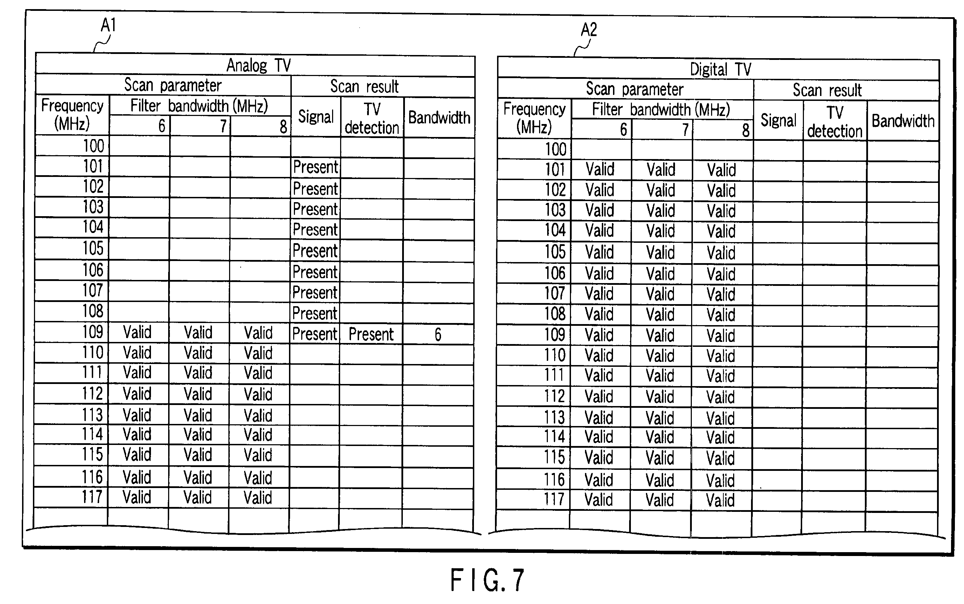

If the presence of an analog TV signal is detected when the receiving frequency is 109 MHz and the filter bandwidth is 6 MHz, "Valid" is set in each of the "Signal" and "TV detection" subfields corresponding to a receiving frequency of 109 MHz and 6 MHz is set in the "Bandwidth" field corresponding to the receiving frequency of 109 MHz in search table A1 shown in FIG. 7.

When the presence of an analog TV signal is detected at a receiving frequency, the value of a receiving frequency to be set next is adjusted on the basis of the bandwidth of the detected analog TV signal. Accordingly, the analog TV scanning processes corresponding to some receiving frequencies are skipped. The reason for this is as follows.

In normal TV broadcasting, channels are arranged such that their frequency bands do not overlap one another. Assuming that the bandwidth of the currently-detected analog TV signal (analog broadcast channel) is Wx and that of a TV signal (analog broadcast channel or digital broadcast channel) adjacent thereto is Wy, the center frequencies of these two channels are separated by Fd (= Wx/2 + Wy/2) so as not to overlap each other.

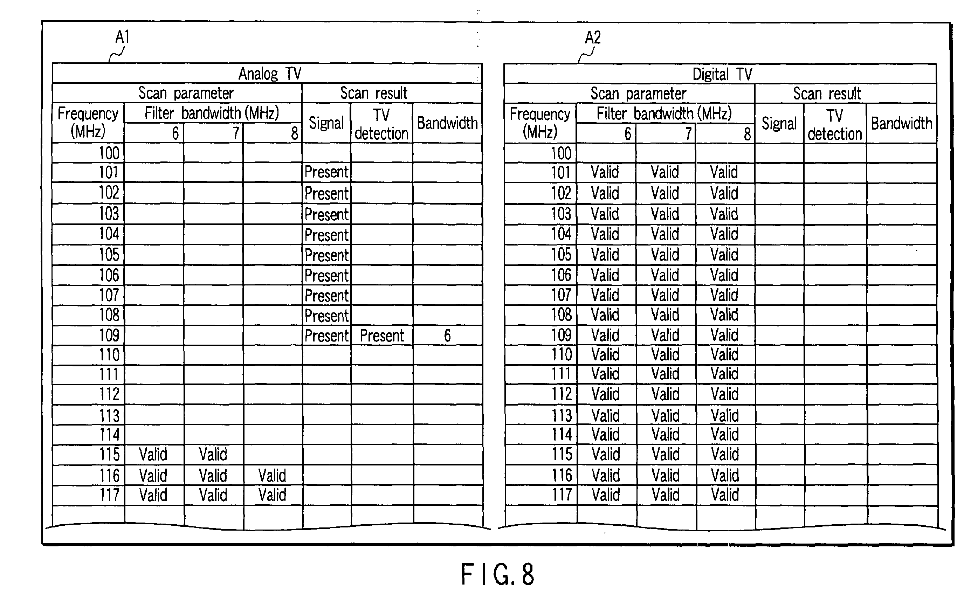

Assuming that the value of a receiving frequency at which the presence of an analog TV signal is detected (i.e., the value of the center frequency of the detected analog TV signal) is Fc, it is assured that another TV broadcast channel is not present within a range of Fc ± Fd and thus the analog TV scanning process can be skipped. For example, a difference in center frequency between adjacent two TV broadcast channels having a bandwidth of 6 MHz is obtained as 6 MHz from the equation: Fd = (6/2 + 6/2). If, therefore, an analog TV signal having a bandwidth of 6 MHz is detected at a receiving frequency of 109 MHz, the value of the next receiving frequency at which the analog TV scanning process should be performed is changed to 115 MHz as indicated in table A1 of FIG. 8. Thus, the analog TV scanning processes corresponding to the receiving frequencies of 110 MHz, 111 MHz, 112 MHz, 113 MHz and 114 MHz can be skipped.

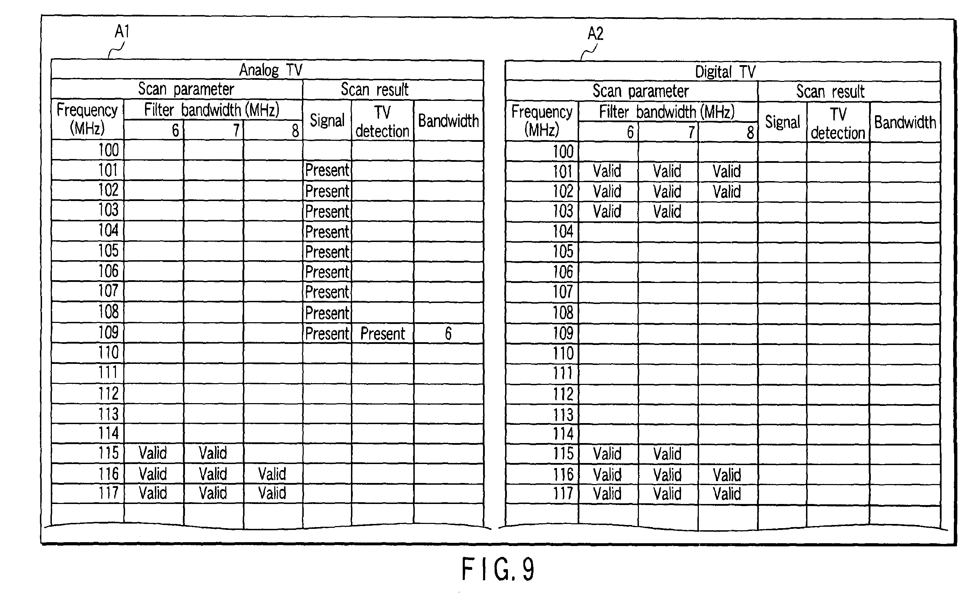

Referring then to table A2 in FIG. 9, the frequency band (i.e., the receiving frequency of a range of 104 MHz to 114 MHz) before and after the center frequency of 109 MHz of the detected analog TV signal is excluded from an object for the digital TV scanning process.

The frequency band necessary for the digital TV scanning process is limited on the basis of the analog TV signals detected by the analog TV scanning and the bandwidths of the analog broadcast signals detected thereby.

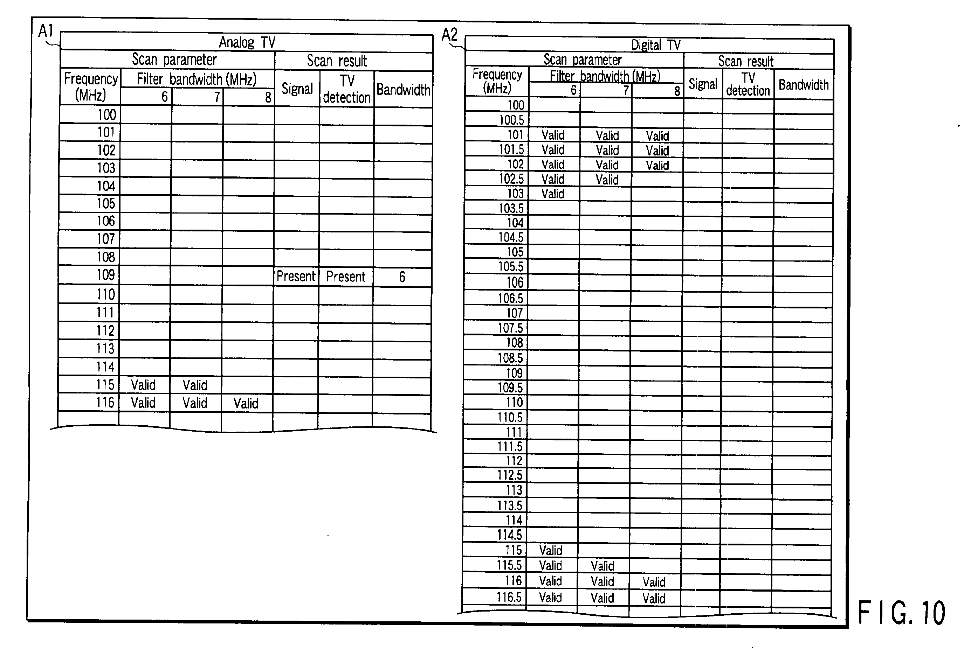

The step width of the receiving frequency in the analog TV scanning process and that in the digital TV scanning process need not always coincide with each other. When the step width in the digital TV scanning process is narrower than that in the analog TV scanning process as shown in FIG. 10, the analog TV scanning process is performed first and then the digital TV scanning is done only for the frequency band that is limited on the basis of the results of the analog TV scanning process. Conversely, when the step width in the digital TV scanning process is broader than that in the analog TV scanning process, the digital TV scanning process is performed first and then the analog TV scanning process has only to be done only for the frequency band that is limited on the basis of the results of the digital TV scanning process.

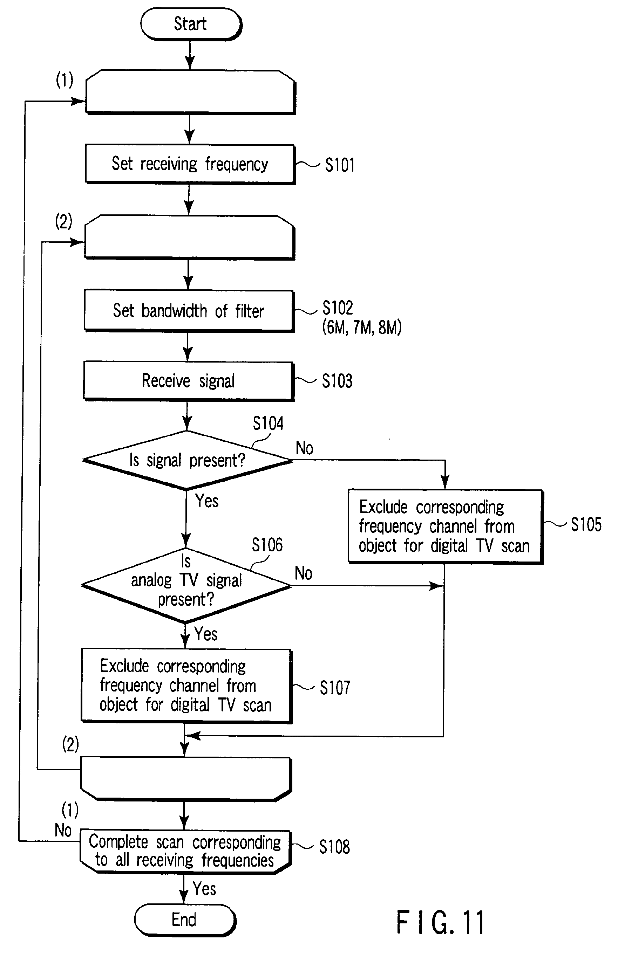

A procedure for performing an analog TV scanning process and narrowing a frequency range within which a digital TV scanning process should be performed on the basis of results of the scanning process, will be described with reference to the flowchart shown in FIG. 11. In the analog TV scanning process, the tuner control program 401 controls the tuner 201 and analog TV signal processing circuit 203 through the controller 202.

First, the tuner control program 401 controls the frequency selection circuit 305 through the controller 202 to set a value of the receiving frequency to the tuner 201 (step S101). Then, the tuner control program 401 controls the band-pass filter 303 and analog TV signal processing circuit 203 to detect the presence or absence of a received signal, the presence or absence of an analog TV signal, and the bandwidth of an analog TV signal when it is present, while varying the filter bandwidth (steps S102 to S107).

More specifically, the tuner control program 401 first sets the filter bandwidth of the band-pass filter 303 to 6 MHz (step S102) to cause the tuner 201 to receive a signal (step S103). Then, the tuner control program 401 inquires of the controller 202 whether a received signal is present or absent (step S104).

If there is no received signal (NO in step S104), the tuner control program 401 excludes the current receiving frequency from an object for the digital TV scanning process (step S105).

If there is a received signal (YES in step S104), the tuner control program 401 determines whether the presence of an analog TV signal is detected with reference to the result of signal detection obtained from the analog TV signal detection circuit 313 through the controller 202 (step S106).

If the analog TV signal is present (YES in step S106), the tuner control program 401 excludes the frequency band including the detected analog TV signal from an object for the digital TV scanning process (step S107). In step S7, the tuner control program 401 considers the frequency bandwidth of the detected analog TV signal and excludes a given frequency band before and after the current receiving frequency from an object for the digital TV scanning process, as illustrated in FIG. 9. After that, the tuner control program 401 returns to step S101 and changes the value of the receiving frequency.

If there is no analog TV signal (NO in step S106), the tuner control program 401 returns to step S102 and changes the filter bandwidth to 7 MHz. Then, the program 401 performs the process again from step S103.

When the analog scanning process corresponding to all receiving frequencies are completed (YES in step S108), the tuner control program 401 controls the tuner 201 and digital TV signal processing circuit 204 to start a digital scanning process. In the digital scanning process, the presence or absence of a digital TV signal and the bandwidth of a digital TV signal when it is present are detected while varying the filter bandwidth for each of the receiving frequencies limited on the basis of the results of the analog scanning process.

As described above, in the present embodiment, a scanning process is performed while the filter bandwidth is being varied. Even though the computer 10 is used in any region of the worid, it is possible to detect all available analog TV broadcast channels and all available digital TV broadcast channels. Moreover, on the basis of the results of the analog TV scanning process, all broadcast signal frequency bands are narrowed to the frequency bands that are likely to include a digital TV signal. Thus, in whatever region, the frequency bands that are likely to include a digital TV signal can correctly be obtained and a time period required for the digital TV scanning process can greatly be shortened.

In the present embodiment, the TV tuner/capture unit 123 is incorporated into the main body 11 of the computer 10. However, as shown in FIG. 12, the TV tuner/capture unit 123 can be connected to the main body 11 via a cable that corresponds to the USB standard or the IEEE 1394 standard.

The function of detecting a TV signal can be applied to various electronic apparatuses such as a portable TV set.

The controller 202 can perform all functions corresponding to the analog TV scan control unit 411, narrowing unit 412 and digital TV scan control unit 413 in the above TV tuner control program 401.

## Claims

1. An electronic apparatus including a receiving unit (123) which receives an analog broadcast signal and a digital broadcast signal, **characterized by** comprising:
a first scanning control unit which controls the receiving unit (123) and performs a first scanning process to detect available channels of one of the analog and digital broadcast signals, the analog and digital broadcast signals belonging to a given broadcast signal frequency band, the first scanning process including a process of varying a receiving frequency of the receiving unit (123) in sequence by a first step width and a process of analyzing an output of a band-pass filter (303) while varying a filter bandwidth of the band-pass filter (303) among a plurality of bandwidths corresponding to different broadcast standards to detect presence or absence of a received signal, presence or absence of the one of the analog and digital broadcast signals, and a bandwidth of the one of the analog and digital broadcast signals when the one is present, for each receiving frequency, the band-pass filter (303) being provided in the receiving unit (123) to extract a signal component belonging to a given frequency band from a signal received by the receiving unit (123);
a narrowing unit which narrows a broadcast signal frequency band to be scan for detect available channels of the other of the analog and digital broadcast signals to a frequency band that is likely to include other of the analog and digital broadcast signals based on a result of the first scanning process; and
a second scanning control unit which controls the receiving unit (123) and performs a second scanning process to detect available channels of the other of the analog and digital broadcast signals within the narrowed frequency band, the second scanning process including a process of varying the receiving frequency of the receiving unit (123) in sequence by a second step width and a process of analyzing an output of the band-pass filter (303) while varying the filter bandwidth of the band-pass filter (303) among the bandwidths corresponding to the broadcast standards to detect presence or absence of the other of the analog and digital broadcast signals, and a bandwidth of the other of the analog and digital broadcast signals when the other is present, for each receiving frequency.

2. The electronic apparatus according to claim 1, **characterized in that** the narrowing unit is configured to determine a frequency band other than a frequency band including no received signal and a frequency band including the one of the analog and digital broadcast signals, as the frequency band that is likely to include the other of the analog and digital broadcast signals.

3. The electronic apparatus according to claim 1, **characterized in that** the first scanning process includes a process of determining a frequency band to be excluded from the first scanning process, based on a frequency band of the one of the analog and digital broadcast signals, which is detected at a receiving frequency, and adjusting a value of a receiving frequency to be set next, based on a result of determination.

4. The electronic apparatus according to claim 1, **characterized in that** the second scanning process includes a process of determining a frequency band to be excluded from the second scanning process, based on a frequency band of the other of the analog and digital broadcast signals, which is detected at a receiving frequency, and adjusting a value of a receiving frequency to be set next based on a result of determination.

5. The electronic apparatus according to claim 1, **characterized in that** the receiving unit (123) is incorporated into a main body of the electronic apparatus.

6. The electronic apparatus according to claim 1, **characterized in that** the receiving unit (123) includes a tuner (201) having the band-pass filter (303) and a frequency selection circuit (305) which selects a receiving frequency, an analog broadcast signal processing circuit (203) having a circuit which analyzes an output signal of the band-pass filter (303) to detect an analog broadcast signal, and a digital broadcast signal processing circuit (204) having a circuit which analyzes an output signal of the band-pass filter (303) to detect a digital broadcast signal,
the first scanning control unit is configured to perform the first scanning process by controlling the tuner (201) and one of the analog and digital broadcast signal processing circuits (203, 204), and
the second scanning control unit is configured to perform the second scanning process by controlling the tuner (201) and other of the analog and digital broadcast signal processing circuits (203, 204).

7. A method of detecting analog broadcast channels and digital broadcast channels, **characterized by** comprising:
controlling a receiving unit (123) which receives an analog broadcast signal and a digital broadcast signal and performing a first scanning process to detect available channels of one of the analog and digital broadcast signals, the analog and digital broadcast signals belonging to a given broadcast signal frequency band, the first scanning process including a process of varying a receiving frequency of the receiving unit (123) by a first step width and a process of analyzing an output of a band-pass filter (303) while varying a filter bandwidth of the band-pass filter (303) among a plurality of bandwidths corresponding to different broadcast standards to detect presence or absence of a received signal, presence or absence of the one of the analog and digital broadcast signals, and a bandwidth of the one of the analog and digital broadcast signals when the one is present, for each receiving frequency, the band-pass filter (303) being provided in the receiving unit (123) to extract a signal component belonging to a given frequency band from a signal received by the receiving unit (123);
narrowing a broadcast signal frequency band to be scan for detect available channels of the other of the analog and digital broadcast signals to a frequency band that is likely to include other of the analog and digital broadcast signals based on a result of the first scanning process; and
controlling the receiving unit (123) and performing a second scanning process to detect available channels of the other of the analog and digital broadcast signals within the narrowed frequency band, the second scanning process including a process of varying the receiving frequency of the receiving unit (123) by a second step width and a process of analyzing an output of the band-pass filter (303) while varying the filter bandwidth of the band-pass filter (303) among the bandwidths corresponding to the broadcast standards to detect presence or absence of the other of the analog and digital broadcast signals, and a bandwidth of the other of the analog and digital broadcast signals when the other is present, for each receiving frequency.

8. The method according to claim 7, **characterized in that** the narrowing includes determining a frequency band other than a frequency band including no received signal and a frequency band including the one of the analog and digital broadcast signals, as the frequency band that is likely to include the other of the analog and digital broadcast signals.

9. The method according to claim 7, **characterized in that** the first scanning process includes a process of determining a frequency band to be excluded from the first scanning process, based on a frequency band of the one of the analog and digital broadcast signals, which is detected at a receiving frequency, and adjusting a value of a receiving frequency to be set next, based on a result of determination.

10. The method according to claim 7, **characterized in that** the second scanning process includes a process of determining a frequency band to be excluded from the second scanning process, based on a frequency band of the other of the analog and digital broadcast signals, which is detected at a receiving frequency, and adjusting a value of a receiving frequency to be set next, based on a result of determination.

11. The method according to claim 7, **characterized in that** the receiving unit (123) includes a tuner (201) having the band-pass filter (303) and a frequency selection circuit (305) which selects a receiving frequency, an analog broadcast signal processing circuit (203) having a circuit which analyzes an output signal of the band-pass filter (303) to detect an analog broadcast signal, and a digital broadcast signal processing circuit (204) having a circuit which analyzes an output signal of the band-pass filter (303) to detect a digital broadcast signal,
the first scanning process is performed by controlling the tuner (201) and one of the analog and digital broadcast signal processing circuits (203, 204), and
the second scanning process is performed by controlling the tuner (201) and other of the analog and digital broadcast signal processing circuits (203, 204).
